(19) Europäisches Patentamt

European Patent Office

Office européen des brevets

(11) **EP 0 865 211 B1**

(12) **EUROPÄISCHE PATENTSCHRIFT**

(45) Veröffentlichungstag und Bekanntmachung des Hinweises auf die Patenterteilung:
**28.12.2005 Patentblatt 2005/52**

(51) Int Cl.$^7$: **H04N 9/64**, H04N 5/45

(21) Anmeldenummer: **98104405.0**

(22) Anmeldetag: **11.03.1998**

(54) **Schaltungsanordnung zur Filterung und Dezimation eines Videosignals**

Device for filtering and decimating a video signal

Circuit pour filtrer et décimer un signal vidéo

(84) Benannte Vertragsstaaten:
**DE ES FR GB IT NL**

(30) Priorität: **11.03.1997 DE 19709976**

(43) Veröffentlichungstag der Anmeldung:
**16.09.1998 Patentblatt 1998/38**

(73) Patentinhaber: **Micronas GmbH**
**79108 Freiburg (DE)**

(72) Erfinder:
• **Nie, Xiaoning, Dr.**
**85591 Vaterstetten (DE)**

• **Mehrgardt, Sönke, Dr.**
**82041 Deisenhofen (DE)**

(74) Vertreter: **Patentanwälte**
**Westphal, Mussgnug & Partner**
**Mozartstrasse 8**
**80336 München (DE)**

(56) Entgegenhaltungen:
**US-A- 4 821 086**

• **PATENT ABSTRACTS OF JAPAN vol. 1997, no. 01, 31. Januar 1997 (1997-01-31) & JP 08 242427 A (MATSUSHITA ELECTRIC IND CO LTD), 17. September 1996 (1996-09-17)**

**Beschreibung**

Die Erfindung betrifft eine Schaltungsanordnung zur Filterung und Dezimation einer Folge von Abtastwerten für Luminanz und Chrominanz für ein Bildsignal. Es wird verwiesen auf US-A-4 821 086 und JP-A-08 242 427 in PAJ, vol. 1997, no.1, 31. Januar 1997.

Bei der digitalen Signalverarbeitung in Fernsehgeräten werden Bildpunkte durch Abtastwerte für Luminanz und Chrominanz repräsentiert. Bei einem herkömmlichen Format wird ein Paar aus zwei Abtastwerten für die Helligkeit Y je ein Abtastwert für zwei Farbsignalkomponenten U, V zugeordnet (Format Y:U:V=4:2:2).

Beispielsweise bei der Bild-im-Bild-Einblendung in US-A-4 821 086 ist zur Verkleinerung des einzublendenden Bildes eine Dezimation des ursprünglichen Bildsignals auf die einzublendende Bildgröße erforderlich. Ein Dezimationsfaktor von 2 bedeutet, daß dann, wenn die Luminanz- und Chrominanzabtastwerte jeweils eine erste Abtastrate aufweisen, die Abtastwerte für Luminanz und Chrominanz des dezimierten Bildsignals jeweils die Hälfte der ursprünglichen Rate aufweisen. Um Aliasingfehler bei der Unterabtastung zu vermeiden, ist eine Bandbegrenzung des ursprünglichen Bildsignals mittels einer geeigneten Tiefpaßfilterung erforderlich.

Die Aufgabe der Erfindung besteht darin, eine möglichst kompakte Schaltungsanordnung anzugeben, durch die eine gleichzeitige Filterung und Dezimation eines Videosignals ermöglicht wird.

Erfindungsgemäß wird diese Aufgabe durch eine Schaltungsanordnung gemäß den Merkmalen des Patentanspruchs 1 gelöst.

Die Schaltungsanordnung umfaßt eine Filterstufe, die als wesentliche Elemente drei Register und zwei Addierer enthält sowie gegebenenfalls Mittel zum Skalieren oder Gewichten der zugeführten Eingangssignale. Bei integrierter Realisierung belegt die Filterstufe eine relativ geringe Fläche. Durch Hintereinanderschalten mehrerer Filterstufen wird ein Filter höherer Ordnung mit besserer Anpassung an einen gewünschten idealen Frequenzgang erhalten. Durch eine Rückkopplung innerhalb jeder Filterstufe ist eine Dezimation um einen höheren Faktor möglich.

Nachfolgend wird die Erfindung anhand der in der Zeichnung dargestellten Ausführungsbeispiele näher erläutert. Es zeigen:

Figur 1    eine Filterschaltung mit zwei Filterstufen und

Figur 2    eine Filterstufe mit Rückkopplung für höheren Dezimationsfaktor.

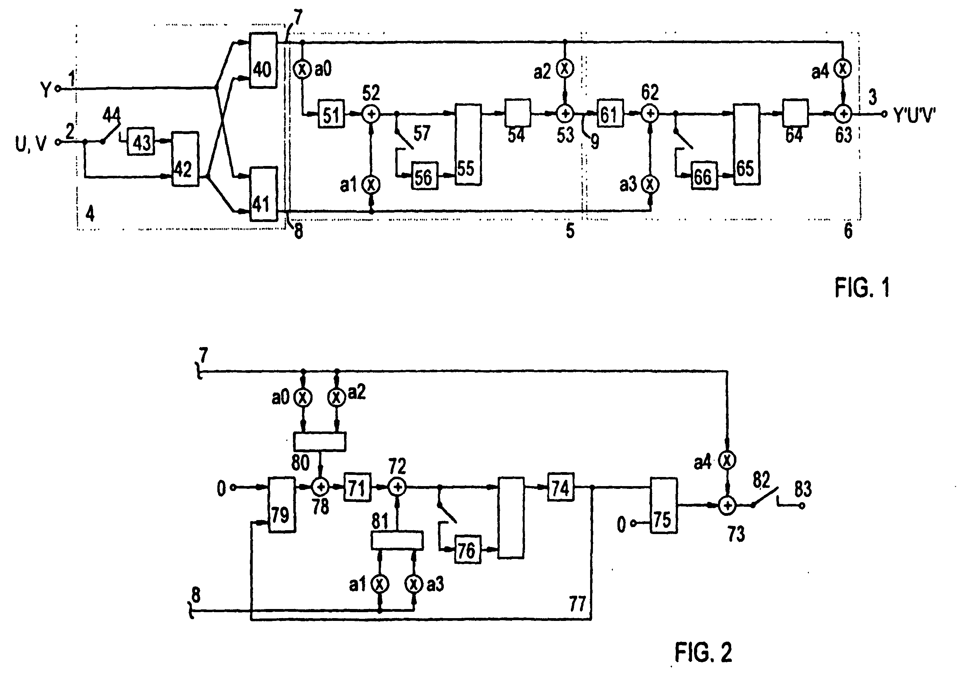

Der Schaltung gemäß Figur 1 werden eingangsseitig an einem Anschluß 1 Abtastwerte für den Luminanzsignalanteil Y und an einem Anschluß 2 Abtastwerte für die beiden Chrominanzsignalkomponenten U, V eines Videosignals zugeführt. Die Folge der Abtastwerte an den Anschlüssen 1 und 2 weisen jeweils eine erste Eingangstaktfrequenz auf, beispielsweise 27 MHz. An einem ausgangsseitigen Anschluß 3 sind die gefilterten und dezimierten Abtastwerte für Luminanz Y' und die Chrominanzsignalanteile U', V' gemeinsam abgreifbar. Die Abtastwerterate am Anschluß 3 beträgt im gezeigten Beispiel 27 MHz, wobei Abtastwerte für den Luminanzsignalanteil Y' mit der halben eingangsseitigen Abtastwerterate von 13,5 MHz vorliegen und die Chrominanzsignalanteile U', V' gemeinsam ebenfalls mit der halben eingangsseitigen Abtastwerterate von 13,5 MHz. An den Anschlüssen 1, 2, 3 liegen die folgenden Abtastwertefolgen an:

| Anschluß 1 | Y0 | Y1 | Y2 | Y3 | Y4 | Y5 | Y6 | Y7 | ... |
|------------|-----|-----|-----|-----|-----|-----|-----|-----|-----|
| Anschluß 2 | U0 | V0 | U2 | V2 | U4 | V4 | U6 | V6 | ... |
| Anschluß 3 | Y0' | U0' | Y2' | V0' | Y4' | U4' | Y6' | V4' | ... |

Durch Schaltungsmittel 4 werden die eingangsseitigen Abtastwerte an Anschlüssen 7, 8 derart bereitgestellt, daß je ein Luminanzabtastwert Y mit einem Chrominanzabtastwert U oder V abwechselt. An den Anschlüssen 7, 8 liegen die folgenden Abtastwertefolgen an:

| Anschluß 7 | Y0 | U0 | Y2 | V0 | Y4 | U4 | Y6 | V4 | ... |
|------------|-----|-----|-----|-----|-----|-----|-----|-----|-----|
| Anschluß 8 | 0 | Y1 | U2 | Y3 | V2 | Y5 | U6 | Y7 | ... |

Unter der Annahme, daß ein Paar von zwei Abtastwerten Y, z.B. Y0 und Y1, je ein Paar aus einem Abtastwert der ersten und der zweiten Farbsignalkomponente, z.B. U0 und V0, zugeordnet ist, so daß Y0, Y1, U0, V0 ein Quadrupel von Luminanz- und Chrominanzabtastwerten bilden, die zwei Bildpunkten eines Videobilds zugeordnet sind, dann enthält die Folge am Anschluß 7 jeweils nur die ersten Luminanzabtastwerte verschiedener Quadrupel, die Folge am Anschluß 8 die zweiten Luminanzabtastwerte der Quadrupel, wobei zwei aufeinanderfolgende Abtastwerte für die Chrominanz an jedem Anschluß einem gleichen Quadrupel angehören. Folglich gehören die Chrominanzabtastwerte der Anschlüsse 7 und 8 jeweils unterschiedlichen Quadrupeln an.

Die Abtastwertefolgen der Anschlüsse 7 und 8 werden in hintereinandergeschaltete Filterstufen 5, 6 eingespeist, durch die eine gleichzeitige Tiefpaßfilterung und Dezimierung durchgeführt wird. Bereits am Ausgang 9 der ersten Stufe 5 liegt ein gefiltertes und dezimiertes Ausgangsvideosignal vor. Durch die nachgeschaltete Stufe 6 wird der Filtergrad und somit die Qualität der Filterung erhöht. Prinzipiell können dem Anschluß 3 entsprechende weitere Filterstufen nachgeschaltet werden.

Im einzelnen sind die Schaltungsblöcke 4, 5, 6 wie folgt aufgebaut. Die Einrichtung 4 enthält ausgangsseitig je einen Multiplexer 40, 41, deren Ausgänge die Anschlüsse 7 bzw. 8 bilden. Ein erster eingangsseitiger Anschluß der Multiplexer 40, 41 ist mit dem Anschluß 1 verbunden, ein zweiter eingangsseitiger Anschluß der Multiplexer 40, 41 ist mit einem weiteren Multiplexer 42 verbunden, der eingangsseitig wahlweise direkt oder über ein Verzögerungselement 43, beispielsweise ein Register, und einen Schalter 44 mit dem Eingangsanschluß 2 verbunden ist. Durch geeignete Steuerung der Elemente 40, ..., 44 sind die oben beschriebenen Abtastwertefolgen an den Anschlüssen 7, 8 erzeugbar. Die Multiplexer 40, 41 werden hierzu mit 27 MHz umgeschaltet, der Multiplexer 42 ist im Raster von 27 MHz dreimal mit seinem oberen Eingangsanschluß, einmal mit seinem unteren Eingangsanschluß verbunden, und der Schalter 44 mit 6,75 MHz betrieben.

Die Filterstufe 5 weist ein erstes Register 51 auf, das eingangsseitig mit dem Anschluß 7 gekoppelt ist. Die am Anschluß 7 anliegenden Werte werden vor Einspeisung in das Register 51 mit einem Gewichtungsfaktor a0 skaliert oder multipliziert. An das Register 51 ist ausgangsseitig ein Addierer 52 angeschlossen, der außerdem über den Gewichtungsfaktor a1 mit dem Anschluß 8 verbunden ist. Die Filterstufe 5 weist ausgangsseitig einen Addierer 53 auf, der über einen Gewichtungsfaktor a2 mit dem Anschluß 7 verbunden ist sowie mit einem zweiten Verzögerungselement 54. Das Verzögerungselement 54 wird von einem Multiplexer oder Umschalter 55 gespeist, der eingangsseitig wahlweise direkt mit dem Addierer 52 verbindbar ist oder über ein drittes Verzögerungselement 56 und einen Schalter 57 mit dem Addierer 52. Im Register 56 werden jeweils vom Addierer 52 ausgegebene Werte, die den Chrominanzsignalanteilen zugeordnet sind, zwischengespeichert. Wenn vom Addierer 52 ein dem Luminanzsignalanteil zuordenbarer Wert ausgegeben wird, wird dieser über die direkte Verbindung dem Multiplexer 55 und dem Register 54 zugeführt. Die Register 51 und 54 werden jeweils mit 27 MHz betrieben. Das Umschalten des Multiplexers 55 erfolgt mit 13,5 MHz. Das Register 56 wird mit 13,5 MHz mit neuen Werten beschrieben, indem der Schalter 57 mit dieser Frequenz geschaltet wird.

Die Filterstufe 6 ist entsprechend der Filterstufe 5 aufgebaut, wobei das dem Register 56 entsprechende eingangsseitige Register 61 mit dem Ausgang 9 der Filterstufe 5 verbunden ist. Dem eingangsseitig liegenden Addierer 62 werden die Abtastwerte des Anschlusses 8 über den Gewichtungsfaktor a3 zugeführt, dem ausgangsseitig liegenden Register 63 werden die Abtastwerte des Anschlusses 7 über den Gewichtungsfaktor a4 zugeführt. Der Ausgang des Addierers 63 bildet den Ausgang 3 der Filterstufe 6 und der Gesamtschaltung. Zur Erhöhung des Filtergrads können weitere Stufen 6 am Anschluß 3 in entsprechender Weise angeschlossen werden.

Das dargestellte Filter weist die Übertragungsfunktion

$$a0\ z^{-4} + a1\ z^{-3} + a2\ z^{-2} + a3\ z^{-1} + a4$$

und bewirkt eine Dezimation um den Dezimationsfaktor von 2. Die Arbeitsweise der Schaltung ist nachfolgend anhand der Registerinhalte für eine Anzahl von Arbeitstakten dargestellt:

| Takt | Reg. 51 | Reg. 56 | Reg. 54 | Register 61 | Register 66 | Register 64 | Anschluß 3 |
|---|---|---|---|---|---|---|---|
| 0 | a0Y0 | 0 | 0 | a2Y0 | 0 | 0 | a4Y0 |
| 1 | a0U0 | 0 | a1Y1+a0Y0 | a2U0 | 0 | a3Y1+a2Y0 | a4U0 |
| 2 | a0Y2 | a1U2+a0U0 | 0 | a2Y2+a1Y1+a0Y0 | a3U2+a2U0 | 0 | a4Y2+a3Y1+a2Y0 |
| 3 | a0V0 | a1U2+a0U0 | a1Y3+a0Y2 | a2V0 | a3U2+a2U0 | a3Y3+a2Y2+a1Y1+ +a0Y0 | a4V0 |
| 4 | a0Y4 | a1V2+a0V0 | a1U2+a0U0 | a2Y4+a1Y3+a0Y2 | a3V2+a2V0 | a3U2+a2U0 | a4Y4+a3Y3+a2Y2+ +a1Y1+a0Y0 |
| 5 | a0U4 | a1V2+a0V0 | a1Y5+a0Y4 | a2U4+a1U2+a0U0 | a3V2+a2V0 | a3Y5+a2Y4+a1Y3+ +a0Y2 | a4U4+a3U2+a2U0 |
| 6 | a0Y6 | a1U6+a0U4 | a1V2+a0V0 | a2Y6+a1Y5+a0Y4 | a3U6+a2U4+a1U2+ +a0U0 | a3V2+a2V0 | a4Y6+a3Y5+a2Y4+ +a1Y3+a0Y2 |
| 7 | a0V4 | a1U6+a0U4 | a1Y7+a0Y6 | a2V4+a1V2++a0V0 | a3U6+a2U4+a1U2+ +a0U0 | a3Y7+a2Y6+a1Y5+ +a0Y4 | a4V4+a3V2+a2V0 |

Aus der Tabelle ist ersichtlich, daß am Ausgangsanschluß 3 Abtastwerte in der Folge Y, U, Y, V im Taktraster von 27 MHz anliegen. Während der Arbeitstakte 4 und 6 ist das Filter bezüglich der ausgegebenen Abtastwerte für Y bereits eingeschwungen. Für die übrigen ausgegebenen Werte, beispielsweise die Abtastwerte für U und V während der Arbeitstakte 5 und 7, ist das Filter noch nicht vollständig eingeschwungen.

In Figur 2 ist eine andere Darstellung für die Filterstufe 5 gezeigt, mit der die entsprechende Filterfunktion bei einer Dezimation um den Faktor 4 bewirkt wird. Entsprechende Elemente sind mit gleichen Bezugszeichen versehen. Die Verzögerungslemente 71, 74, 76 entsprechen den Verzögerungselementen 51, 54, 56 bzw. 61, 64, 66. Aufgrund der vierfachen Unterabtastung kann die Filterstruktur zweifach benutzt werden, um sowohl die Terme niedriger Ordnung als auch die Terme höherer Ordnung der Filterfunktion zu berechnen. Dies wird durch einen Rückkopplungspfad 77 bewirkt, der den Ausgang des Registers 74 auf die Eingangsseite des Registers 71 additiv rückkoppelt. Hierzu ist ein Addierer 78 vorgesehen, der einerseits mit dem Anschluß 7 und andererseits über einen Multiplexer 79 mit dem Rückkopplungspfad verbunden ist. Ein Multiplexer 75 ist vorgesehen, um während der Rückkopplungsphase den Addierer 73 vom Register 74 zu trennen.

Wenn bei abgeschalteter Rückkopplung die niedrigwertigen Terme berechnet werden, wird über dem Multiplexer 79 der Wert "0" zugeführt. Während dieser Berechnungsphase ist die in Figur 2 gezeigte Struktur wie die Filterstufe 5 geschaltet. Die Koeffizienten werden den Addierern 78, 72 über jeweilige Multiplexer 80 bzw. 81 zugeführt. Ersterer Multiplexer 80 schaltet zwischen den Koeffizienten a0 und a2 um, letzterer Multiplexer 81 zwischen den Koeffizienten a1, a3. Am Ausgangsanschluß ist ein Schalter 82 vorgesehen, um die berechneten Werte zeitrichtig abzugreifen.

Bei einem höheren, durch ein ganzzahliges Vielfaches von vier gebildeten Filtergrad sind weitere derartige Stufen dem Ausgang nachgeschaltet. Bei einem Filtergrad von beispielsweise 8 ist der in Figur 2 gezeigten Filterstufe eine weitere entsprechende Filterstufe nachgeschaltet. Der obere Eingang des dort entsprechenden Multiplexers 79 ist dann anstelle des Werts "0" mit dem Ausgang 83 verbunden. Außerdem wird die in Figur 2 gezeigte Filterstufe entsprechend verwendet mit dem Unterschied, daß über die Multiplexer 80 und 81 die Eingangswerte an den Anschlüssen 7 bzw. 8 über jeweils vier verschiedene Gewichtungskoeffizienten eingekoppelt werden, die jeweils zeitrichtig zugeschaltet werden.

Die Registerbelegung der in Figur 2 dargestellten Filter- und Dezimationsschaltung ergibt sich für eine Anzahl von Arbeitstakten wie folgt:

4

| Takt | Register 71 | Register 76 | Register 74 | Anschluß 83 |
|------|-------------|-------------|-------------|-------------|
| 0 | a0Y0 | 0 | 0 | a4Y0 |
| 1 | a0U0 | 0 | a0Y0+a1Y1 | a4U0 |
| 2 | a0Y0+a1Y1+a2Y2 | a0U0+a1U2 | 0 | a4Y2 |
| 3 | a0V0 | a0U0+a1U2 | a0Y0+a1Y1+a2Y2+a3Y3 | a4V0 |
| 4 | a0Y4 | a0V0+a1V2 | a0U0+a1U2 | a0Y0+a1Y1+a2Y2++a3Y3+a4Y4 |
| 5 | a0U0+a1U2+a2U4 | a0V0+a1V2 | a0Y4+a1Y5 | a4U4 |
| 6 | a0Y4+a1Y5+a2Y6 | a0U0+a1U2+a2U4+a3U6 | a0V0+a1V2 | a4Y6 |
| 7 | a0V0+a1V2+a2V4 | a0U0+a1U2+a2U4+a3U6 | a0Y4+a1Y5+a2Y6+a3Y7 | a4V4 |
| 8 | a0Y8 | a0V0+a1V2+a2V4+a3V6 | a0U0+a1U2+a2U4+a3U6 | a0Y4+a1Y5+a2Y6++a3Y7+a4Y2 |

Am Anschluß 83 werden mittels entsprechender Steuerung des Schalters 82 die Ausgangswerte in der Abfolge Y, U, V, Y abgegriffen. Im Vergleich zur Taktrate der Eingangswerte sind die Abtastwerte der Ausgangsfolge vierfach unterabgetastet. In obiger Tabelle sind diese Werte unterstrichen.

Bei einer symmetrischen Übertragungsfunktion des Filters sind die Fiterkoeffizienten spiegelsymmetrisch zum mittleren Filterterm. Dies bedeutet beispielsweise, daß die Koeffizienten a4 und a0 gleich sind. In den Schaltungen der Figur 1 und der Figur 2 können die jeweils gleichen Gewichtungsmittel dann zusammengefaßt werden.

Bei einem jeweils um eins höherem Filtergrad, beispielsweise beim Filtergrad 3, ist der Stufe 5 nur das Register 61 und der Addierer 62, in dem das Signal des Anschlusses 8 gewichtet mit dem Multiplikationsfaktor a3 eingespeist wird, nachgeschaltet. Das gefilterte und dezimierte Ausgangssignal wird am Ausgang des Addierers 62 abgegriffen.

## Patentansprüche

1. Schaltungsanordnung zur Filterung und Dezimation einer Folge von Abtastwerten für Luminanz (Y) und Chrominanz (U, V) für ein Bildsignal, umfassend Mittel (4) zur Bereitstellung der Abtastwerte in einer ersten und einer zweiten Folge an je einem Anschluß (7, 8), wobei die Folgen je einen Abtastwert von Luminanz und Chrominanz abwechselnd enthalten, und an die Mittel zur Bereitstellung (4) ist eine Filterstufe (5) angeschlossen wobei die Filterstufe (5) einen ersten Addierer (52) enthält, der mit dem ersten Anschluß (7) über ein erstes, in der Filterstufe (5) befindliches Verzögerungselement (51) und mit dem zweiten Anschluß (8) gekoppelt ist, und wobei die Filterstufe (5) einen zweiten Addierer (53) enthält, der mit dem ersten Anschluß (7) gekoppelt ist und über ein zweites in der Filterstufe (5) befindliches, Verzögerungselement (54) und einen in der Filterstufe (5) befindlichen Umschalter (55) wahlweise direkt oder über ein in der Filterstufe (5) befindliches drittes Verzögerungselement (56) mit dem ersten Addierer (52) verbunden ist und wobei die Filterstufe (5) einen Ausgangsanschluß (9) zum Abgriff eines dezimierten Ausgangssignals aufweist.

2. Schaltungsanordnung nach Anspruch 1,
   **dadurch gekennzeichnet, daß**
   das Bildsignal eine Folge von Quadrupeln (z. B. Y0, Y1, U0, V0; Y2, Y3, U2, V2) von Abtastwerten mit je einem ersten und einem zweiten Abtastwert für Luminanz (Y0, Y1; Y2, Y3) und einem ersten und einem zweiten Abtastwert für Chrominanz (U0, V0; U2, V2) umfaßt und daß die Mittel (4) zur Bereitstellung bewirken, daß eine der an den Anschlüssen bereitgestellten Folgen die ersten Abtastwerte für die Luminanz (Y0; Y2) umfaßt und die andere die zweiten Abtastwerte (Y1; Y3) und daß zwei aufeinanderfolgende Abtastwerte für Chrominanz (U0, V0; U2, V2) jeweils einem gleichen Quadrupel zuordenbar sind und diese Quadrupel in der ersten und zweiten Folge unterschiedlich sind.

3. Schaltungsanordnung nach Anspruch 1 oder 2,
   **dadurch gekennzeichnet, daß**
   die Mittel (4) zur Bereitstellung der Abtastwerte einen ersten Eingangsanschluß (1) zum Anlegen von Abtastwerten für die Luminanz (Y) sowie einen zweiten Eingangsanschluß (2) zum Anlegen von Abtastwerte für die Chrominanz (U, V) umfassen, wobei die Mittel zur Bereitstellung der Abtastwerte (4) einen ersten Multiplexer (42) enthalten, der eingangsseitig über ein Verzögerungselement (43) und direkt mit dem zweiten Eingangsanschluß (2) gekoppelt ist, wobei die Mittel zur Bereitstellung der Abtastwerte (4) je einen weiteren Multiplexer (40, 41) enthalten, die ausgangsseitig mit je einem der Anschlüsse (7, 8) zur Bereitstellung der Folgen gekoppelt sind und eingangsseitig mit jeweils mit dem ersten Eingangsanschluß (1) und dem Ausgang des ersten Multiplexers (42) verbunden sind.

4. Schaltungsanordnung nach Anspruch 3,
   **dadurch gekennzeichnet, daß**
   die Folgen der Abtastwerte am ersten und zweiten Anschluss (7, 8) der Mittel (4) zur Bereitstellung eine vorgegebene Taktfrequenz umfassen, dass das erste und zweite Verzögerungselement (51, 54) der Filterstufe (5) mit der Taktfrequenz mit Abtastwerten beschreibbar sind und das dritte Verzögerungselement (56) der Filterstufe mit der Hälfte der Taktfrequenz und daß der Umschalter (55) der Filterstufe (5) mit der Taktfrequenz umsteuerbar ist.

5. Schaltungsanordnung nach einem der Ansprüche 1 bis 4,
   **gekennzeichnet durch**
   multiplikative Gewichtung (a0, a1, a2) der Abtastwerte der Folgen an den ersten und zweiten Anschlüssen (7, 8) vor Einspeisung in die Addierer (52, 53) der Filterstufe (5).

6. Schaltungsanordnung nach einem der Ansprüche 1 bis 5,
   **gekennzeichnet durch**
   eine weitere entsprechend ausgebildete Filterstufe (6), deren erstes Verzögerungselement (61) anstelle der Verbindung mit dem ersten Anschluß der Mittel (4) zur Bereitstellung mit dem Ausgangsanschluß (9) der ersten Filterstufe (5) gekoppelt ist.

7. Schaltungsanordnung nach einem der Ansprüche 1 bis 6,
   **dadurch gekennzeichnet, daß**
   eine Rückkopplungsschleife (77) innerhalb der Filterstufe vorgesehen ist, durch die der Ausgang des zweiten Verzögerungselements (74) über einen Multiplexer (79) und einen Addierer (78) auf das erste Verzögerungselement (71) rückgekoppelt ist, und daß der andere Anschluß dieses Addierers (78) mit einem der Anschlüsse (7) der Mittel (4) zur Bereitstellung der Abtastwerte verbunden ist

8. Schaltungsanordnung nach Anspruch 8,
   **dadurch gekennzeichnet, daß**
   der Ausgangsanschluß (83) der Filterstufe zum Abgriff des dezimierten Ausgangssignals über einen Schalter (82) mit dem Ausgang des zweiten Addierers (73) der Filterstufe verbunden ist.

**Claims**

1. A circuit configuration for filtering and decimating a sequence of sampling values for luminance (Y) and chrominance (U, V) for a video signal, comprising means (4) for providing the sampling values in a first and a second sequence at a respective terminal (7, 8), the sequences each alternately containing a sampling value for luminance and chrominance, and to the provision means (4) is connected a filter stage (5), the filter stage (5) containing a first adder (52), which is coupled to the first terminal (7) via a first delay element (51) situated in the filter stage (5) and to the second terminal (8), and the filter stage (5) containing a second adder (53), which is coupled to the first terminal (7) and is connected to the first adder (52) via a second delay element (54) situated in the filter stage (5) and a changeover switch (55) situated in the filter stage (5) optionally directly or via a third delay element (56) situated in the filter stage (5), the filter stage (5) comprising an output terminal (9) for tapping a decimated output signal.

2. A circuit configuration according to Claim 1,
   **characterised in that** the video signal comprises a sequence of quadruples (e.g. Y0, Y1, U0, V0; Y2, Y3, U2, V2) of sampling values each having a first and a second sampling value for luminance (Y0, Y1; Y2, Y3) and a first and second sampling value for chrominance (U0, V0; U2, V2)
   and **in that** the provision means (4) ensure that one of the sequences provided at the terminals comprises the first sampling values for the luminance (Y0; Y2) and the other comprises the second sampling values (Y1; Y3)
   and **in that** two consecutive sampling values for chrominance (U0, V0; U2, V2) can in each case be allocated to an identical quadruple and these quadruples are different in the first and second sequences.

3. A circuit configuration according to Claim 1 or 2,
   **characterised in that** the means (4) for providing the sampling values comprise a first input terminal (1) for applying sampling values for the luminance (Y) and also a second input terminal (2) for applying sampling values for the chrominance (U, V), the means for providing the sampling values (4) containing a first multiplexer (42), which at the input side is coupled via a delay element (43) and directly to the second input terminal (2), the means for providing the sampling values (4) each containing another multiplexer (40, 41), which at the output side are coupled to one of the terminals (7, 8) for providing the sequences and at the input side are connected to the first input terminal (1) and the output of the first multiplexer (42) in each case.

4. A circuit configuration according to Claim 3,
   **characterised in that** the sequences of sampling values at the first and second terminals (7, 8) of the provision means (4) comprise a predetermined clock frequency,
   **in that** the first and second delay elements (51, 54) of the filter stage (5) with the clock frequency can be described with sampling values and the third delay element (56) of the filter stage (5) with half the clock frequency
   and **in that** the changeover switch (55) of the filter stage (5) can be changed over at the clock frequency.

5. A circuit configuration according to one of Claims 1 to 4,
   **characterised by** multiplicative weighting (a0, a1, a2) of the sampling values of the sequences at the first and second terminals (7, 8) prior to feeding into the adders (52, 53) of the filter stage (5).

6. A circuit configuration according to one of Claims 1 to 5,
   **characterised by** a further correspondingly constructed filter stage (6), the first delay element (61) of which is coupled, instead of the connection to the first terminal of the provision means (4), to the output terminal (9) of the first filter stage (5).

7. A circuit configuration according to one of Claims 1 to 6,
   **characterised in that** a feedback loop (77) is provided inside the filter stage, by which the output of the second delay element (74) is fed back via a multiplexer (79) and an adder (78) to the first delay element (71),
   and **in that** the other terminal of this adder (78) is connected to one of the terminals (7) of the means (4) for providing the sampling values.

8. A circuit configuration according to Claim 8,
   **characterised in that** for tapping the decimated output signal the output terminal (83) of the filter stage is connected to the output of the second adder (73) of the filter stage via a switch (82).

**Revendications**

1. Circuit pour filtrer et décimer une série de valeurs de balayage pour la luminance (Y) et la chrominance (U, V) concernant un signal d'image, comprenant des moyens (4) pour mettre à disposition les valeurs de balayage dans une première et une deuxième séries pour respectivement un raccordement (7, 8), les séries contenant respectivement en alternance une valeur de balayage de luminance et de chrominance, dans lequel les moyens (4) de mise à disposition sont raccordés à un étage de filtre (5) qui contient un premier additionneur (52) qui est couplé au premier raccordement (7) par un premier élément de temporisation (51) situé dans l'étage de filtre (5) et au deuxième raccordement (8), et l'étage de filtre (5) contient un deuxième additionneur (53) couplé au premier raccordement (7) et relié au premier additionneur (52) par un deuxième élément de temporisation (54) situé dans l'étage de filtre (5) et par un commutateur (55) situé dans l'étage de filtre (5), soit directement soit par l'intermédiaire d'un troisième élément de temporisation (56) situé dans l'étage de filtre (5), et dans lequel l'étage de filtre (5) présente un raccordement de sortie (9) pour le prélèvement d'un signal de sortie décimé.

2. Circuit selon la revendication 1,
   **caractérisé en ce que**
   le signal d'image comprend une série de quadruples (par exemple Y0, Y1, U0, V0 ; Y2, Y3, U2, V2) de valeurs de balayage avec respectivement une première et une deuxième valeurs de balayage pour la luminance (Y0, Y1 ; Y2, Y3) et une première et une deuxième valeurs de balayage pour la chrominance (U0, V0 ; U2, V2), et les moyens (4) de mise à disposition font en sorte que l'une des séries mise à disposition des raccordements contient les premières valeurs de balayage pour la luminance (Y0 ; Y2) et l'autre les deuxièmes valeurs de balayage (Y1 ; Y3) et que deux valeurs de balayage successives pour la chrominance (U0, V0 ; U2, V2) peuvent respectivement être associés à un même quadruple et ces quadruples sont différents dans les première et deuxième séries.

3.  Circuit selon la revendication 1 ou 2,
    **caractérisé en ce que**
    les moyens (4) de mise à disposition des valeurs de balayage comprennent un premier raccordement d'entrée (1) pour appliquer des valeurs de balayage pour la luminance (Y) ainsi qu'un deuxième raccordement d'entrée (2) pour appliquer des valeurs de balayage pour la chrominance (U, V), dans lequel les moyens de mise à disposition des valeurs de balayage (4) contiennent un premier multiplexeur (42), qui côté entrée est couplé par l'intermédiaire d'un élément de temporisation (43) et directement au deuxième raccordement d'entrée (2), dans lequel les moyens de mise à disposition des valeurs de balayage (4) contiennent respectivement un autre multiplexeur (40, 41), qui côté sortie sont couplés respectivement à l'un des raccordements (7, 8) pour la mise à disposition des séries et, côté sortie, reliés respectivement au premier raccordement d'entrée (1) et à la sortie du premier multiplexeur (42).

4.  Circuit selon la revendication 3,
    **caractérisé en ce que**
    les séries de valeurs de balayage au niveau des premier et deuxième raccordements (7, 8) des moyens (4) de mise à disposition comprennent une fréquence d'horloge prédéterminée, les premier et deuxième éléments de temporisation (51, 54) de l'étage de filtre (5) peuvent décrire des valeurs de balayage à la fréquence d'horloge et le troisième élément de temporisation (56) de l'étage de filtre (5) à la moitié de la fréquence d'horloge, et le commutateur (55) de l'étage de filtre (5) peut être commuté à la fréquence d'horloge.

5.  Circuit selon l'une quelconque des revendications 1 à 4,
    **caractérisé par**
    une pondération multiplicative (a0, a1, a2) des valeurs de balayage des séries sur les premiers et deuxièmes raccordements avant l'alimentation dans les additionneurs (52, 53) de l'étage de filtre (5).

6.  Circuit selon l'une quelconque des revendications 1 à 5,
    **caractérisé par**
    un autre étage de filtre (6) de forme correspondante dont le premier élément de temporisation (61) est couplé au raccordement de sortie (9) du premier étage de filtre (5) au lieu de la liaison avec le premier raccordement des moyens (4) de mise à disposition.

7.  Circuit selon l'une quelconque des revendications 1 à 6,
    **caractérisé en ce qu'**
    une boucle de couplage réactif (77) est prévue à l'intérieur de l'étage de filtre, par laquelle la sortie du deuxième élément de temporisation (74) est couplée par réaction au premier élément de temporisation (71) par l'intermédiaire d'un multiplexeur (79) et d'un additionneur (78), et l'autre raccordement de cet additionneur (78) est relié à l'un des raccordements (7) des moyens (4) de mise à disposition des valeurs de balayage.

8.  Circuit selon la revendication 8,
    **caractérisé en ce que**
    le raccordement de sortie (83) de l'étage de filtre est relié par un commutateur (82) à la sortie du deuxième additionneur de l'étage de filtre pour le prélèvement du signal de sortie décimé.

EP 0 865 211 B1

Y ○—1

U, V ○—2

○ Y'U'V'  3

40  41  42  43  44

7  8

a0  a1  a2  a3  a4

51  52  53  54  55  56  57

61  62  63  64  65  66

4  5  6  9

**FIG. 1**

7  8

a0  a2  a1  a3  a4

79  80  81  78  71  72  73  74  75  76  77

82  83

0

**FIG. 2**